# EUROPEAN PATENT APPLICATION

(11) **EP 4 531 471 A1**
(43) Date of publication of application: **02.04.2025**
(21) Application number: 24187751.3
(22) Date of filing: 10.07.2024
(51) Int. Cl.: H04W 52/02, H04L 12/12

(54) **INTERIOR GATEWAY PROTOCOL AND TRAFFIC ENGINEERING SLEEP STATE FOR A NETWORK**

(30) Priority: 26.09.2023 IN 202341064503; 23.04.2024 US 202418643201
(71) Applicant: Juniper Networks, Inc., Sunnyvale, CA 94089 (US)
(72) Inventor: BARTH, Jonathan C., Sunnyvale, 94089 (US); SANGLI, Srihari Ramachandra, Sunnyvale, 94089 (US)
(74) Representative: D Young & Co LLP

(57) **Abstract**

A first network device may identify one or more components to transition to a sleep state, and may power down the one or more components to cause a link with a second network device to be in a sleep state. The first network device may provide, to the second network device, a link sleep state message identifying the link, and may provide updated link sleep state messages to the second network device while the sleep state of the link is maintained.

## Description

### CROSS-REFERENCE TO RELATED APPLICATION

This Patent Application claims priority to India Provisional Patent Application No. 202341064503, filed on September 26, 2023, entitled "SYSTEMS AND METHODS FOR PROVIDING ENERGY EFFICIENT NETWORKS," and assigned to the assignee hereof. The disclosure of the prior Application is considered part of and is incorporated by reference into this Patent Application.

### BACKGROUND

An interior gateway protocol (IGP) is a type of routing protocol used for exchanging routing table information between gateways (e.g., network devices) within an autonomous system, such as a system of corporate local area networks (LANs).

### SUMMARY

Some implementations described herein relate to a method. The method may include identifying one or more components of a first network device to transition to a sleep state, and powering down the one or more components to cause a link with a second network device to be in a sleep state. The method may include providing, to the second network device, a link sleep state message identifying the link, and providing updated link sleep state messages to the second network device while the sleep state of the link is maintained.

Some implementations described herein relate to a first network device. The first network device may include one or more memories and one or more processors. The one or more processors may be configured to identify one or more components to transition to a sleep state, and power down the one or more components to cause a link with a second network device to be in a sleep state. The one or more processors may be configured to provide, to the second network device, a link sleep state message identifying the link, and provide updated link sleep state messages to the second network device while the sleep state of the link is maintained, wherein each of the updated link sleep state messages includes a sleep request bit set in a sleep type length value message.

Some implementations described herein relate to a computer-readable medium that encodes a set of instructions. The set of instructions, when executed by one or more processors of a first network device, may cause the first network device to identify one or more components to transition to a sleep state, and power down the one or more components to cause a link with a second network device to be in a sleep state. The set of instructions, when executed by one or more processors of the first network device, may cause the first network device to provide, to the second network device, a link sleep state message identifying the link, and provide updated link sleep state messages to the second network device while the sleep state of the link is maintained. The set of instructions, when executed by one or more processors of the first network device, may cause the first network device to maintain a neighbor adjacency with the second network device based on the updated link sleep state messages.

### BRIEF DESCRIPTION OF THE DRAWINGS

Figs. 1A-1H are diagrams of an example associated with providing IGP and traffic engineering sleep state for a network.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing IGP and traffic engineering sleep state for a network.

### DETAILED DESCRIPTION

The following detailed description of example implementations refers to the accompanying drawings. The same reference numbers in different drawings may identify the same or similar elements.

Currently, IGP link state and relationships between neighboring network devices are a binary state (e.g., a link is either up or down). Network devices may transition one or more components into a sleep state via powering down the one or more components or placing the one or more components in some other wake-on-arrival state. However, sleep state information associated with network devices is not maintained throughout a network of network devices. Thus, path computing entities are unable to wake up sleeping network devices. Networks are designed for peak utilization for very short periods of time, while also accounting for various types of failures. During non-peak times, a network may generate significant resource savings and may reduce a carbon footprint of the network by placing unused traffic engineering (TE) paths or links into a sleep state. However, network devices are currently unable to place traffic engineering paths into a sleep state based on transitioning unused components of network devices into a low power or sleep state since the sleep state information is not maintained throughout the network.

Thus, current techniques for managing networks consume computing resources (e.g., processing resources, memory resources, communication resources, and/or the like), networking resources, and/or the like are associated with failing to maintain sleep state information associated with network devices throughout a network, failing to place unused links of the network into a sleep state during non-peak utilization times based on not maintaining the sleep state information, unnecessarily maintaining unused links during non-peak utilization times of the network, and/or the like.

Some implementations described herein relate to a network device that provides IGP and traffic engineering sleep states for a network. For example, the network device may identify one or more components to transition to a sleep state, and may power down the one or more components to cause a link with another network device to be in a sleep state. The network device may provide, to the other network device, a link sleep state message identifying the link, and may provide updated link sleep state messages to the other network device while the sleep state of the link is maintained. The network device may maintain a neighbor adjacency with the other network device based on the updated link sleep state messages.

In this way, the network device provides IGP and traffic engineering sleep states for a network. For example, the network device may identify one or more components (e.g., processors, interfaces, memories, and/or the like) to enter into a sleep state. Once the one or more components have been identified, the network device may transition the one or more components into the sleep state (e.g., by powering down the one or more components). The network device may provide sleep state information (e.g., identifying the one or more components transitioned into the sleep state) to neighboring network devices so that the neighboring network devices may determine that the network device has transitioned into the sleep state, may determine that one or more traffic engineering links with the network device are in the sleep state and are to be avoided, may determine that the one or more traffic engineering links may be awakened from the sleep state if new demands cannot be satisfied by a current state of the network, and/or the like. Thus, the network device conserves computing resources, networking resources, and/or the like that would otherwise have been consumed by failing to maintain sleep state information associated with network devices throughout a network, failing to place unused links of the network into a sleep state during non-peak utilization times based on not maintaining the sleep state information, unnecessarily maintaining unused links during non-peak utilization times of the network, and/or the like.

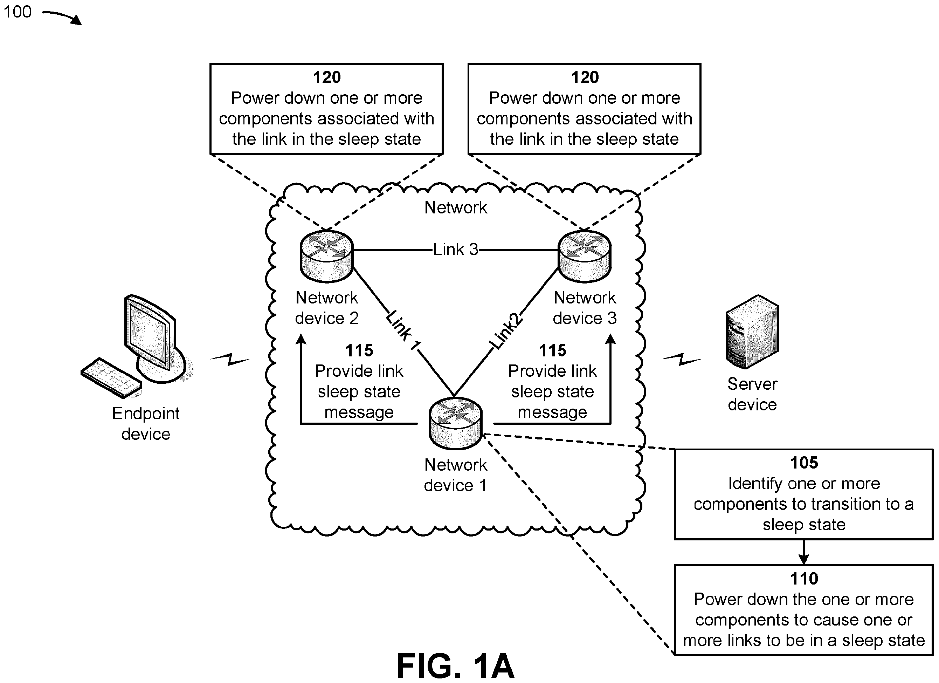

Figs. 1A-1H are diagrams of an example 100 associated with providing IGP and traffic engineering sleep state for a network. As shown in Figs. 1A-1H, the example 100 includes an endpoint device associated with a network and a server device. The network may include multiple network devices, such as a first network device (e.g., network device 1), a second network device (e.g., network device 2), and a third network device (e.g., network device 3). A first link (e.g., link 1) may be provided between the first network device and the second network device, a second link (e.g., link 2) may be provided between the first network device and the third network device, and a third link (e.g., link 3) may be provided between the second network device and the third network device. Further details of the endpoint device, the server device, the network, the network devices, and the links are provided elsewhere herein.

As shown in Fig. 1A, and by reference number 105, the first network device may identify one or more components to transition to a sleep state. For example, during non-peak network traffic times, the first network device may place one or more links (e.g., traffic engineered paths) into a sleep state. In order to place the one or more links into the sleep state, the first network device may transition one or more unused components (e.g., interfaces, processors, memories, and/or the like) into a low power state or a sleep state. A traffic engineering placement model of the first network device may move traffic flows away from the unused components or to specific components in order to facilitate the transition to the sleep state. In some implementations, the first network device may identify the unused components as the one or more components to transition to the sleep state.

As further shown in Fig. 1A, and by reference number 110, the first network device may power down the one or more components to cause one or more links (e.g., the first link and the second link) to be in a sleep state. For example, once the first network device identifies the one or more components to transition into the sleep state, the first network device may power down the one or more components in order to cause one or more links (e.g., with neighboring network devices, such as the second network device and the third network device) to be in the sleep state. Once the one or more components and the one or more links are transitioned to the sleep state, the neighboring network devices may determine that the first network device is not going down but rather is transitioning to the sleep state, may determine that the one or more links are in the sleep state and are to be avoided, may determine that the one or more links are in the sleep state and may be woken if new traffic demands cannot be satisfied without the one or more links, and/or the like.

As further shown in Fig. 1A, and by reference number 115, the first network device may provide a link sleep state message to the second network device and the third network device. For example, normally, communicating IGP network devices may transition neighboring network device adjacencies to a down state when changes occur. However, since the first network device, the second network device, and the third network device are IGP sleep capable network devices, the first network device may provide a link state message (e.g., a hello message) to the second network device and the third network device. The link state message may include a sleep request (SR) bit set in a sleep type length value (TLV) message. The link state message may indicate to neighboring network devices (e.g., the second network device and the third network device) that a graceful power down is in progress at the first network device and to maintain IGP adjacency with the first network device.

As further shown in Fig. 1A, and by reference number 120, each of the second network device and the third network device may power down one or more components associated with a link. For example, the neighboring network devices (e.g., the second network device and the third network device) may implement a sleep process. In some implementations, to implement the sleep process the second network device may identify one or more components associated with a link (e.g., the first link), and may power down the identified one or more components associated with the link. Alternatively, or additionally, to implement the sleep process the third network device may identify one or more components associated with the link (e.g., the second link), and may power down the identified one or more components associated with the link.

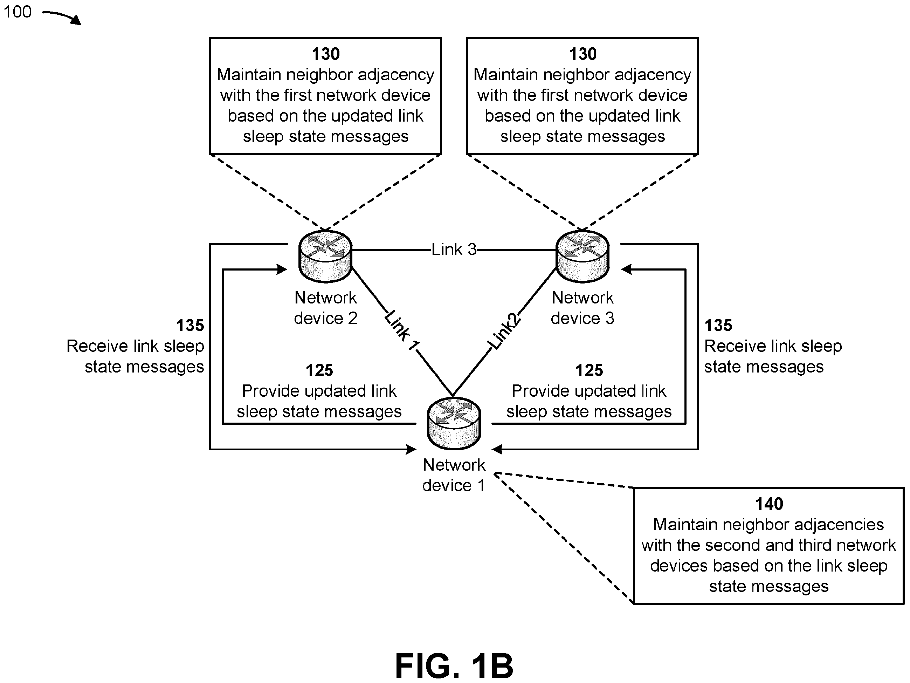

As shown in Fig. 1B, and by reference number 125, the first network device may provide updated link sleep state messages to each of the second network device and the third network device. For example, the first network device may continue to generate updated link sleep state messages while the link remains in the sleep state, and may provide the updated link sleep state messages to neighboring network devices (e.g., the second network device and the third network device). In some implementations, each of the updated link sleep state messages may include an SR bit set in a sleep TLV message. In some implementations, transitioning into a sleep state does not bifurcate the first network device (e.g., an IGP speaker) from the network since the first network device may maintain at least one interface in an active state.

As further shown in Fig. 1B, and by reference number 130, each of the second network device and the third network device may maintain neighbor adjacency with the first network device based on the updated link sleep state messages. For example, the updated link sleep state messages may cause the second network device and the third network device to maintain a neighbor adjacency with the first network device. In some implementations, the first network device may flood the second network device and the third network device with link state protocol data units (PDUs) (e.g., link state packets (LSPs) or link state advertisements (LSAs)), as the link sleep state messages, while the one or more components of the first network devices are in the sleep state. This enables the second network device and the third network device to reestablish adjacencies with the first network device without transitioning to the down state, and enables the first network device to reinitiate a smooth database synchronization.

As further shown in Fig. 1B, and by reference number 135, the first network device may receive link sleep state messages from each of the second network device and the third network device. For example, besides maintaining the adjacency with the first network device in a sleep state, the neighboring network devices (e.g., the second network device and the third network device) may generate link sleep state messages, and may provide the link sleep state messages to the first network device. The first network device may receive the link sleep state messages from the second network device and the third network device. In some implementations, each of the link sleep state messages may include an SR bit set in a sleep TLV message. The link sleep state messages may include complete sequence number PDUs (CSNPs) in an intermediate-system-to-intermediate system (IS-IS) environment and may include LSAs in an open shortest path first (OSPF) environment. The first network device may flood an entire database with the link sleep state messages.

As further shown in Fig. 1B, and by reference number 140, the first network device may maintain neighbor adjacencies with the second network device and the third network device based on the link sleep state messages. For example, the link sleep state messages may cause the first network device to maintain a neighbor adjacency with the second network device and the third network device. This enables the first network device to reestablish adjacencies with the second network device and the third network device without transitioning to the down state, and enables the second network device and the third network device to reinitiate a smooth database synchronization.

In some implementations, the link sleep state message, each of the update link state messages, and each of the link sleep state messages may include the following syntax (e.g., for an IGP state):
*regress@R1> show isis adjacency detail*
*R0*
*Interface: ge-0*/*1*/*1.0, Level: 2, State: Sleep, Expires in 24 secs*
*Priority: 0, Up*/*Down transitions: 1, Last transition: 00:03:30 ago*
*Circuit type: 2, Speaks: IP, IPv6*
*Topologies: Unicast*
*Restart capable: Yes, Adjacency advertisement: Advertise*/*Sleep*
*IP addresses: 10.1.12.2*
*IPv6 addresses: fe80::5604:1bff:fe00:6199*
*IPv6 Global Interface Address: dead:beef:112::2*
*Level 2 IPv4 Adj-SID: 299808*
*Level 2 IPv6 Adj-SID: 299824*
where an adjacent state is designated as sleep instead of as up or down.

In some implementations, the link sleep state message, each of the update link state messages, and each of the link sleep state messages may include the following syntax (e.g., for a traffic engineering database (TED) state):
*regress@R2# run show ted database topology-type 13-unicast extensive*
*TED database: 5 ISIS nodes 5 INET nodes 0 INET6 nodes*
*NodeID: R2.00(1.1.1.2)*
*Type: Rtr, Age: 1500 secs(sleep), LinkIn: 8, LinkOut: 8*
*Protocol: IS-IS(2)*
*1.1.1.2, 128.53.107.59*
*To: R5.00(1.1.1.5), Local: 10.1.25.1, Remote: 10.1.25.2*
*Local interface index: 359, Remote interface index: 358*
*Color: 0x400 red*
*Metric: 10*
*IGP metric: 200*
*Power metric: #*
*Minimum power(W):* #
*Maximum power(W):* #
*Current power(W):* #

In order to facilitate traffic engineered path placement, a power specific metric may also be advertised. This enables a path computing entity of a network device to place paths on the network in a power aware manner. The power specific metric may be a single composite metric derived by a local network device (e.g., *Metric* = %(*max-power*(*W*) *min-power*(*W*)) / *current power*(*W*)), may be a set of values as measured by the local network device (e.g., minimum, maximum, or current power utilization (*W*)), and/or the like. In some implementations, the power specific metric may include the following syntax:
*regress@R2# run show ted database topology-type 13-unicast extensive*
*TED database: 5 ISIS nodes 5 INET nodes 0 INET6 nodes*
*NodeID: R2.00(1.1.1.2)*
*Type: Rtr, Age: 15 secs, LinkIn: 8, LinkOut: 8*
*Protocol: IS-IS(2)*
*1.1.1.2, 128.53.107.59*
*To: R5.00(1.1.1.5), Local: 10.1.25.1, Remote: 10.1.25.2*
*Local interface index: 359, Remote interface index: 358*
*Color: 0x400 red*
*Metric: 10*
*IGP metric: 200*
*Power metric: #*
*Minimum power(W):* #
*Maximum power(W):* #
*Current power(W):* #.

In a tactical or uncoordinated configuration, an ingress network device may independently place trafficked engineered tunnels into a power-aware state. Network devices within the network may independently put components into a reset, sleep, or power off state. Power related attributes may be flooded throughout the network via IGP-TE extensions. In a strategic or coordinated configuration, power related information may be exported to a centralized application that instructs network devices to explicitly put components into a reset, sleep, or power off state. In a sleep configuration, the sleep state may be utilized to denote any of several states that an interface or a component may be placed into (e.g., a power off state, a reset state, a low-power consumption state, a slowing clock-rates state, a wake-on-arrival state, and/or the like). From a protocol perspective, a network protocol may remember that a port (e.g., in a sleep state) is present in the network and may be utilized when needed. The port may have been enabled and may be transitioned out of the sleep state on-demand.

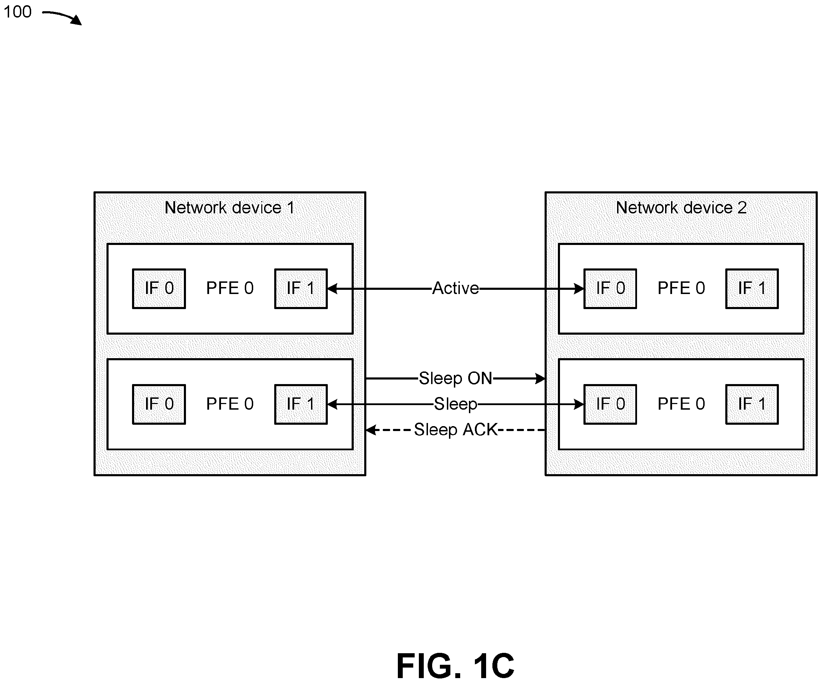

Fig. 1C depicts example IGP-TE sleep capability and flags associated with the first network device and the second network device. As shown, when an interface of the first network device is powered down, the first network device may signal to the second network device that the first network device is going into the sleep state. A bi-directional agreement of the sleep state may be reached between the first and second network devices. It is not mandatory that the second network device also powers down, but the link between the first network device and the second network device may be flooded with a sleep flag set. IGP adjacency can be remembered for the duration of the sleep by the first network device and the second network device. A link prefix may be maintained in a link state database (LSDB) of the second network device, with an associated sleep flag set. Links with the sleep flag set may be pruned for all shortest path trees (SPTs), and traffic engineered tunnels may move away from sleeping interfaces.

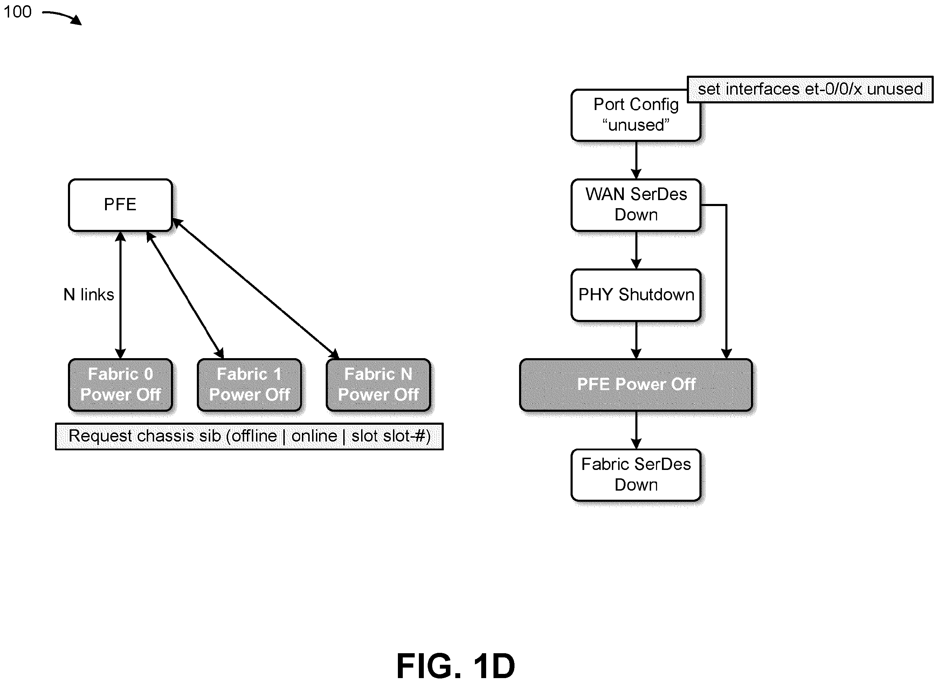

Fig. 1D depicts an example of powering off a component of a network device. As shown in the right side of Fig. 1D, the network device may determine that a port associated with a packet forwarding engine (PFE) is unused, and may power down a wide area network (WAN) serializer/deserializer (SerDes) and a physical layer (PHY) device associated with the PFE. Once the WAN SerDes and the PHY device are powered down, the PFE may be powered down, which may power down fabrics (e.g., Fabric 0 through Fabric N, as shown in the left side of Fig. 1D) and links associated with the powered down PFE.

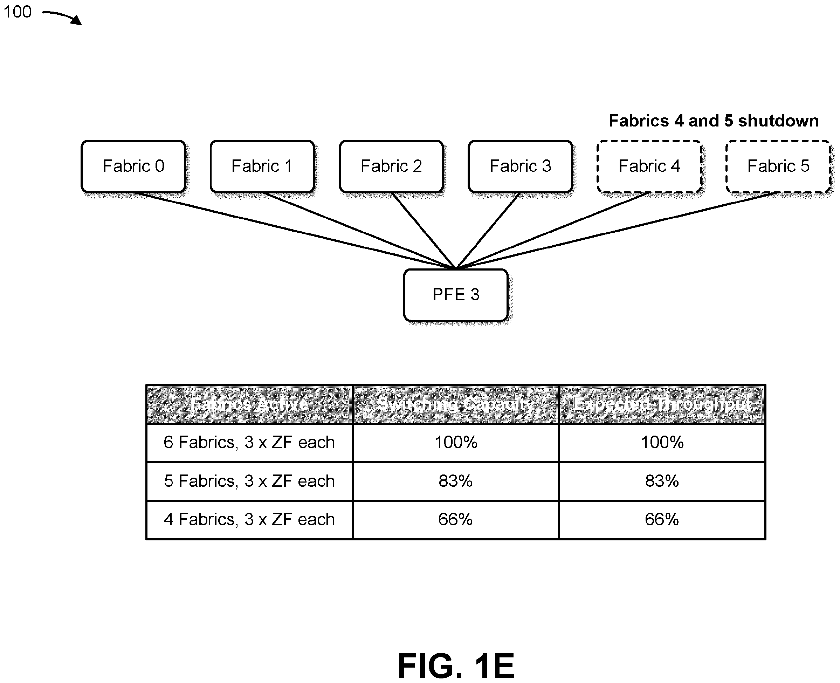

Fig. 1E depicts another example of powering off a component of a network device. As shown, a PFE (e.g., PFE3) of a network device may be associated with fabrics (e.g., Fabric 0 through Fabric 5). There is a strong relationship between a load on the PFE and the ability to disable components of the network device. For example, a lightly loaded PFE may require fewer active fabrics, with remaining fabrics being powered off, and an unused PFE may be disabled. As shown in Fig. 1E, if a switching capacity of the PFE is at 66%, the PFE may need four fabrics and the network device may power down Fabric 4 and Fabric 5.

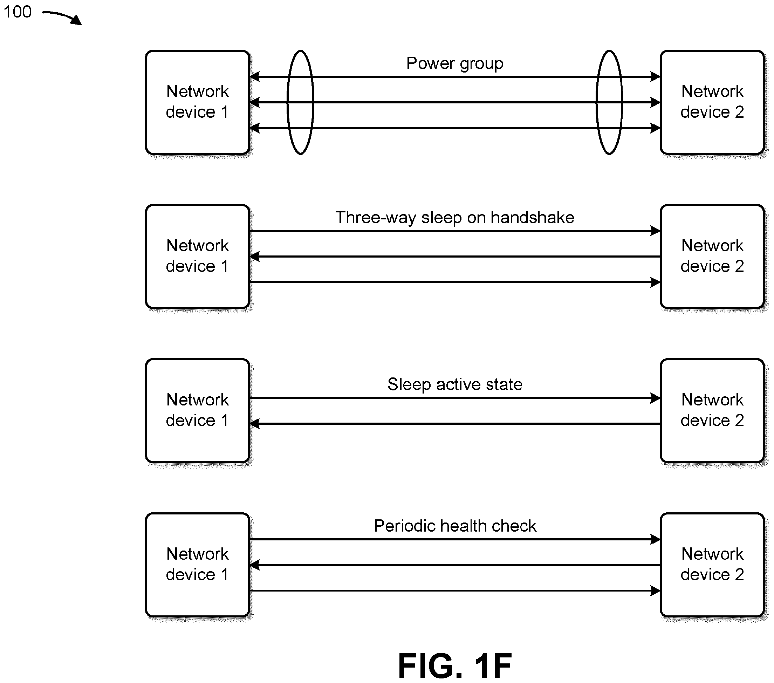

Fig. 1F depicts an example of coordinated power on and off between network devices (e.g., the first network device and the second network device). A power management protocol may be utilized by the network devices. When powering down a component of a network device, the power management protocol may require coordination between neighboring network devices. The power management protocol may gracefully move a data plane associated with the network devices, and may require link aggregation control protocol (LACP) and/or link layer discovery protocol (LLDP) extensions to be utilized for a network device to host applications. As further shown in Fig. 1F, a power group may be established between the network devices. The power group may include a set of links with a common PFE, a control channel for coordinating power on or off of child links, and periodic exchange of the state of all links in the power group. As further shown in Fig. 1F, the network devices may utilize a three-way handshake for power on/off states to ensure reliability and mutual agreement of transitions between sleep states. As further shown, one of the network devices may perform a periodic health check of the link to ensure that the link maintains the sleep state (e.g., that the sleep active state has not failed).

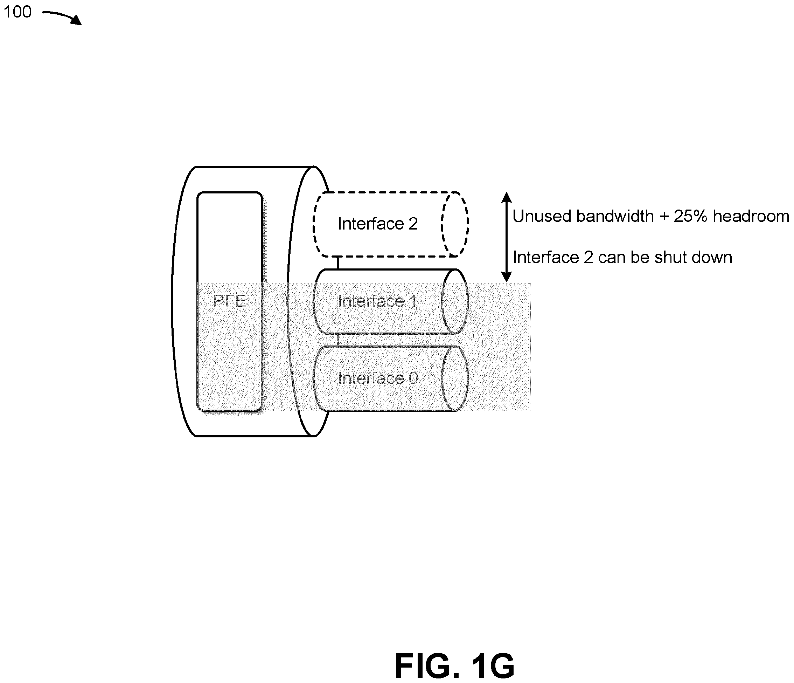

Fig. 1G depicts another example of coordinated power on and off between network devices (e.g., the first network device and the second network device). As shown, a power group may include a PFE associated with three interfaces (e.g., interface 0, interface 1, and interface 2). The PFE and the interfaces may be provided in a network device. The network device may utilize a local policy to power up or down components within the power group, may utilize time-of-day activation constraints for powering up or down components, may utilize a minimum capacity threshold (e.g., below which components of the power group may be evaluated for power up/down), may utilize an evaluation interval during which power group utilization is evaluated, and/or the like. As further shown in Fig. 1G, when bandwidth encompasses only interface 0 and interface 1, the network device may power down interface 2 due to the unused bandwidth.

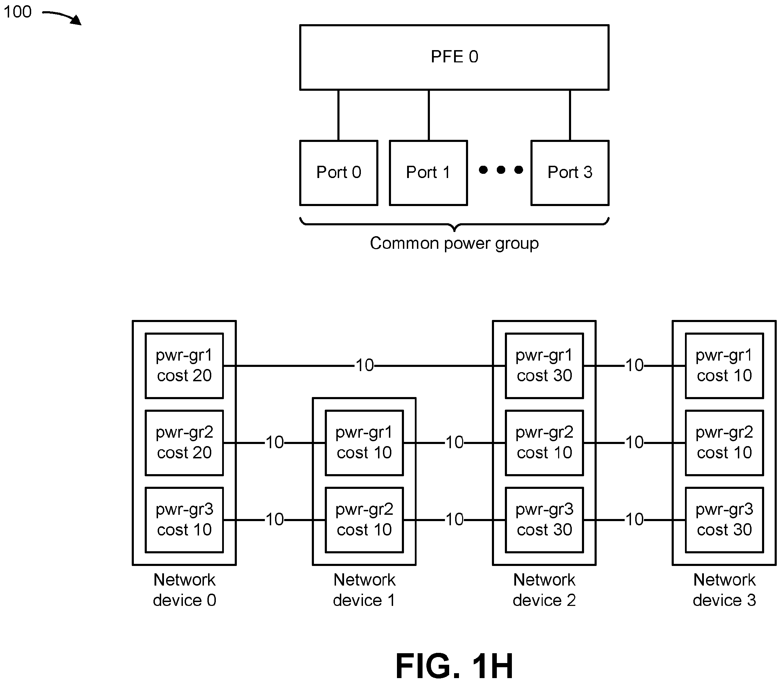

Fig. 1H depicts examples of power aware path placement of a network device. As shown at the top of Fig. 1H, traffic engineered networks often leverage various techniques for grouping traffic engineered links (e.g., a common power group for port 0 through port 3). The network device may utilize the group during path placement as inclusion or exclusion constraints (e.g., calculate a secondary path that is diverse from a primary path). The same concept can be applied by introducing a group that represents an association of a link (e.g., a port) to a PFE - (e.g., a power group). As shown at the bottom of Fig. 1H, when an ingress network device (e.g., network device 0) or a PCE computes a path, the power group may be utilized during path placement. This may be analogous to a routing by PFE methodology where the power group is considered along with any other traffic engineering attributes. The power group methodology may follow a most-filled or a least-filled placement model, where the most-filled model generates results associated with using a least number of PFEs (e.g., power group and cost based routing) and the least-filled model generates results associated with spreading traffic engineered tunnels across the greatest number of PFEs (e.g., power group only routing). This may enable network devices to make independent decisions to disable fabric cards or PFEs based on load.

In this way, the network device provides IGP and traffic engineering sleep states for a network. For example, the network device may identify one or more components to enter into a sleep state. Once the one or more components have been identified, the network device may transition the one or more components into the sleep state. The network device may provide sleep state information (e.g., identifying the one or more components transitioned into the sleep state) to neighboring network devices so that the neighboring network devices may determine that the network device has transitioned into the sleep state, may determine that one or more traffic engineering links with the network device are in the sleep state and are to be avoided, may determine that the one or more traffic engineering links may be awakened from the sleep state if new demands cannot be satisfied by a current state of the network, and/or the like. Thus, the network device conserves computing resources, networking resources, and/or the like that would otherwise have been consumed by failing to maintain sleep state information associated with network devices throughout a network, failing to place unused links of the network into a sleep state during non-peak utilization times based on not maintaining the sleep state information, unnecessarily maintaining unused links during non-peak utilization times of the network, and/or the like.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

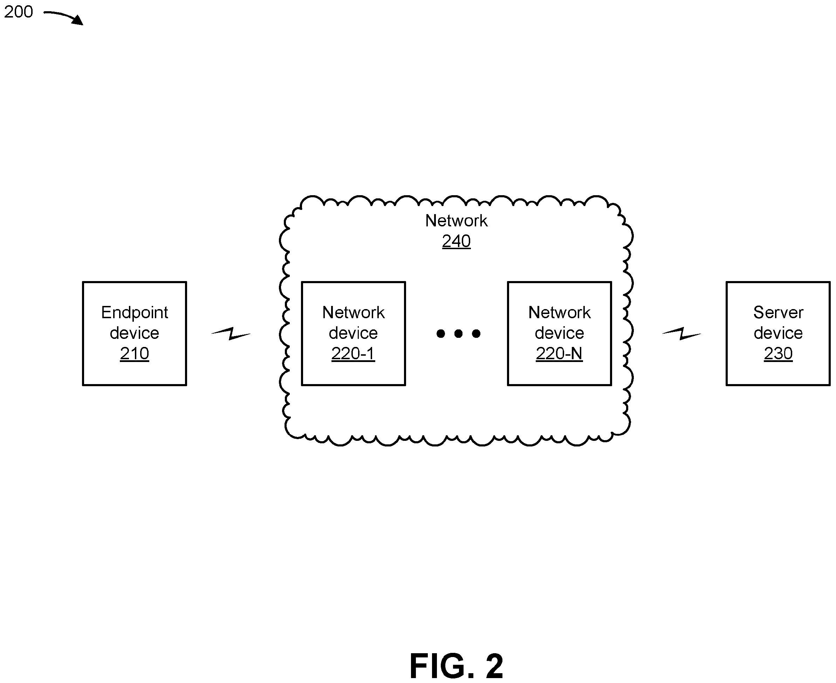

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a server device 230, and a network 240. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, a server device, a group of server devices, or a similar type of device. In some implementations, the endpoint device 210 may receive network traffic from and/or may provide network traffic to other endpoint devices 210 and/or the server device 230, via the network 240 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 240.

The server device 230 may include one or more devices capable of receiving, generating, storing, processing, providing, and/or routing information, as described elsewhere herein. The server device 230 may include a communication device and/or a computing device. For example, the server device 230 may include a server, such as an application server, a client server, a web server, a database server, a host server, a proxy server, a virtual server (e.g., executing on computing hardware), or a server in a cloud computing system. In some implementations, the server device 230 may include computing hardware used in a cloud computing environment.

The network 240 includes one or more wired and/or wireless networks. For example, the network 240 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

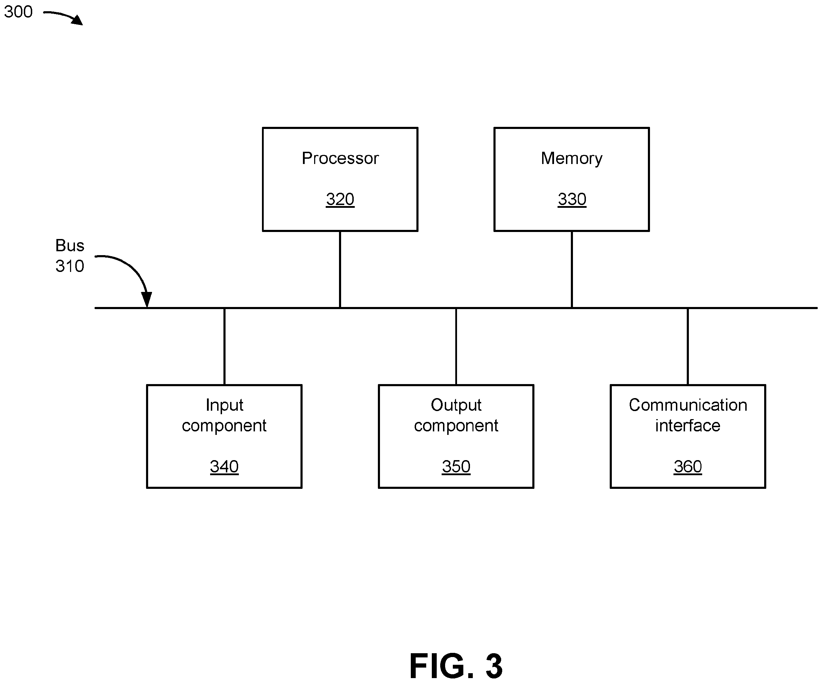

Fig. 3 is a diagram of example components of one or more devices of Fig. 2. The example components may be included in a device 300, which may correspond to the endpoint device 210, the network device 220, and/or the server device 230. In some implementations, the endpoint device 210, the network device 220, and/or the server device 230 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a computer-readable medium (e.g., the memory 330) may encode a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

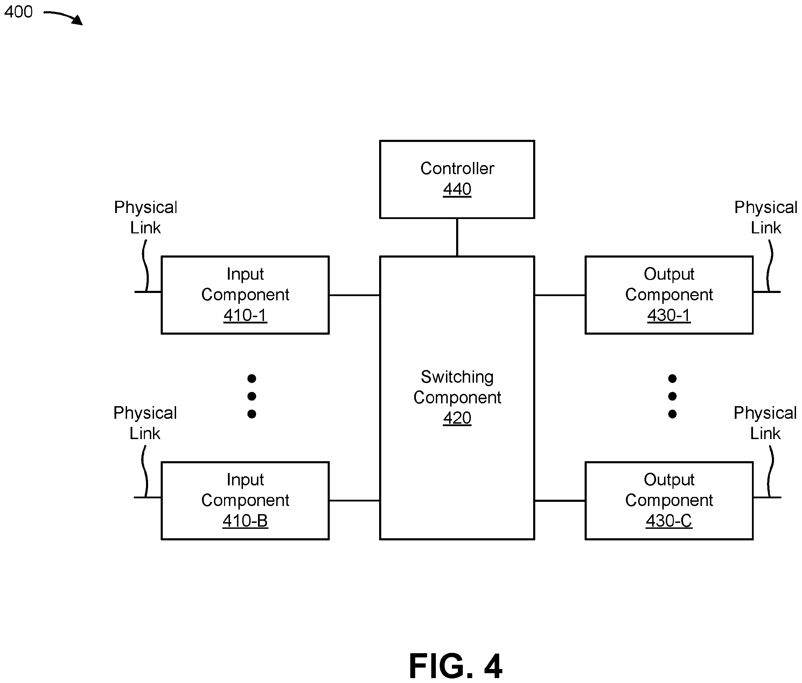

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions encoded by a computer-readable medium. A computer-readable medium can include a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

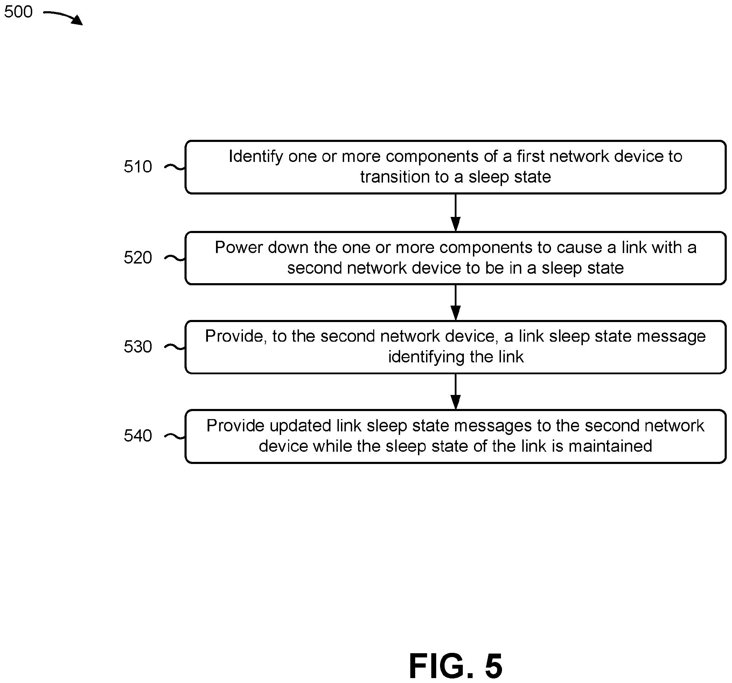

Fig. 5 is a flowchart of an example process 500 for providing IGP and traffic engineering sleep state for a network. In some implementations, one or more process blocks of Fig. 5 may be performed by a network device (e.g., a first network device 220). In some implementations, one or more process blocks of Fig. 5 may be performed by another device or a group of devices separate from or including the network device, such as an endpoint device (e.g., the endpoint device 210) and/or a server device (e.g., the server device 230). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include identifying one or more components to transition to a sleep state (block 510). For example, the first network device may identify one or more components to transition to a sleep state, as described above.

As further shown in Fig. 5, process 500 may include powering down the one or more components to cause a link with a second network device to be in a sleep state (block 520). For example, the first network device may power down the one or more components to cause a link with a second network device to be in a sleep state, as described above. In some implementations, the sleep state associated with the one or more components includes one or more of a power off state, a reset state, a low-power consumption state, a slowing clock-rates state, or a wake-on-arrival state.

As further shown in Fig. 5, process 500 may include providing, to the second network device, a link sleep state message identifying the link (block 530). For example, the first network device may provide, to the second network device, a link sleep state message identifying the link, as described above. In some implementations, the second network device is configured to power down one or more components of the second network device and associated with the link. In some implementations, the link sleep state message includes a sleep request bit set in a sleep type length value message.

As further shown in Fig. 5, process 500 may include providing updated link sleep state messages to the second network device while the sleep state of the link is maintained (block 540). For example, the first network device may provide updated link sleep state messages to the second network device while the sleep state of the link is maintained, as described above. In some implementations, the updated link sleep state messages cause the second network device to maintain a neighbor adjacency with the first network device. In some implementations, each of the updated link sleep state messages includes a sleep request bit set in a sleep type length value message.

In some implementations, process 500 includes maintaining a neighbor adjacency with the second network device based on the updated link sleep state messages. In some implementations, process 500 includes receiving link sleep state messages from the second network device, and maintaining a neighbor adjacency with the second network device based on the link sleep state messages.

In some implementations, process 500 includes storing data identifying the link and the sleep state of the link in a link state database. In some implementations, process 500 includes pruning the link for shortest-path tree calculations. In some implementations, process 500 includes moving a traffic engineering tunnel away from the link. In some implementations, process 500 includes transitioning the one or more components and the link from the sleep state to an active state based on a traffic demand. In some implementations, process 500 includes performing a health check of the link to ensure that the link maintains the sleep state.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a first network device which may identify one or more components to transition to a sleep state, and may power down the one or more components to cause a link with a second network device to be in a sleep state. The first network device may provide, to the second network device, a link sleep state message identifying the link, and may provide updated link sleep state messages to the second network device while the sleep state of the link is maintained.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   identifying, by a first network device, one or more components to transition to a sleep state;
   powering down, by the first network device, the one or more components to cause a link with a second network device to be in a sleep state;
   providing, by the first network device and to the second network device, a link sleep state message identifying the link; and
   providing, by the first network device, updated link sleep state messages to the second network device while the sleep state of the link is maintained.
2. The method of clause 1, further comprising:
   maintaining a neighbor adjacency with the second network device based on the updated link sleep state messages.
3. The method of clause 1 or clause 2, further comprising:
   receiving link sleep state messages from the second network device; and
   maintaining a neighbor adjacency with the second network device based on the link sleep state messages.
4. The method of any preceding clause, wherein the second network device is configured to power down one or more components of the second network device and associated with the link.
5. The method of any preceding clause, wherein the updated link sleep state messages cause the second network device to maintain a neighbor adjacency with the first network device.
6. The method of any preceding clause, wherein the link sleep state message includes a sleep request bit set in a sleep type length value message.
7. The method of the any preceding clause, wherein each of the updated link sleep state messages includes a sleep request bit set in a sleep type length value message.
8. A first network device, comprising:
   one or more memories; and
   one or more processors to:
      identify one or more components to transition to a sleep state;
      power down the one or more components to cause a link with a second network device to be in a sleep state;
      provide, to the second network device, a link sleep state message identifying the link; and
      provide updated link sleep state messages to the second network device while the sleep state of the link is maintained,
         wherein each of the updated link sleep state messages includes a sleep request bit set in a sleep type length value message.
9. The first network device of clause 8, wherein the one or more processors are further to:
   store data identifying the link and the sleep state of the link in a link state database.
10. The first network device of clause 8 or clause 9, wherein the one or more processors are further to:
   prune the link for shortest-path tree calculations.
11. The first network device of any of clauses 8 to 10, wherein the one or more processors are further to:
   move a traffic engineering tunnel away from the link.
12. The first network device of any of clauses 8 to 11, wherein the sleep state associated with the one or more components includes one or more of a power off state, a reset state, a low-power consumption state, a slowing clock-rates state, or a wake-on-arrival state.
13. The first network device of any of clauses 8 to 12, wherein the one or more processors are further to:
   transition the one or more components and the link from the sleep state to an active state based on a traffic demand.
14. The first network device of any of clauses 8 to 13, wherein the one or more processors are further to:
   perform a health check of the link to ensure that the link maintains the sleep state.
15. A computer-readable medium storing a set of instructions, the set of instructions comprising:
   one or more instructions that, when executed by one or more processors of a first network device, cause the first network device to:
   identify one or more components to transition to a sleep state;
   power down the one or more components to cause a link with a second network device to be in a sleep state;
   provide, to the second network device, a link sleep state message identifying the link;
   provide updated link sleep state messages to the second network device while the sleep state of the link is maintained; and
   maintain a neighbor adjacency with the second network device based on the updated link sleep state messages.
16. The computer-readable medium of clause 15, wherein the one or more instructions further cause the first network device to:
   receive link sleep state messages from the second network device; and
   maintain the neighbor adjacency with the second network device based on the link sleep state messages.
17. The computer-readable medium of clause 15 or clause 16, wherein the one or more instructions further cause the first network device to:
   store data identifying the link and the sleep state of the link in a link state database; and
   prune the link for shortest-path tree calculations.
18. The computer-readable medium of any of clauses 15 to 17, wherein the one or more instructions further cause the first network device to:
   move a traffic engineering tunnel away from the link.
19. The computer-readable medium of any of clauses 15 to 18, wherein the one or more instructions further cause the first network device to:
   transition the one or more components and the link from the sleep state to an active state based on a traffic demand.
20. The computer-readable medium of any of clauses 15 to 19, wherein the one or more instructions further cause the first network device to:
   perform a health check of the link to ensure that the link maintains the sleep state.

## Claims

1. A method, comprising:
identifying, by a first network device, one or more components to transition to a sleep state;
powering down, by the first network device, the one or more components to cause a link with a second network device to be in a sleep state;
providing, by the first network device and to the second network device, a link sleep state message identifying the link; and
providing, by the first network device, updated link sleep state messages to the second network device while the sleep state of the link is maintained.

2. The method of claim 1, further comprising:
maintaining a neighbor adjacency with the second network device based on the updated link sleep state messages.

3. The method of claim 1 or claim 2, further comprising:
receiving link sleep state messages from the second network device; and
maintaining a neighbor adjacency with the second network device based on the link sleep state messages.

4. The method of any preceding claim, wherein the second network device is configured to power down one or more components of the second network device and associated with the link.

5. The method of any preceding claim, wherein the updated link sleep state messages cause the second network device to maintain a neighbor adjacency with the first network device.

6. The method of any preceding claim, wherein the link sleep state message includes a sleep request bit set in a sleep type length value message.

7. The method of the any preceding claim, wherein each of the updated link sleep state messages includes a sleep request bit set in a sleep type length value message.

8. A first network device, comprising:
one or more memories; and
one or more processors to:
identify one or more components to transition to a sleep state;
power down the one or more components to cause a link with a second network device to be in a sleep state;
provide, to the second network device, a link sleep state message identifying the link; and
provide updated link sleep state messages to the second network device while the sleep state of the link is maintained,
wherein each of the updated link sleep state messages includes a sleep request bit set in a sleep type length value message.

9. The first network device of claim 8, wherein the one or more processors are further to:
store data identifying the link and the sleep state of the link in a link state database.

10. The first network device of claim 8 or claim 9, wherein the one or more processors are further to:
prune the link for shortest-path tree calculations.

11. The first network device of any of claims 8 to 10, wherein the one or more processors are further to:
move a traffic engineering tunnel away from the link.

12. The first network device of any of claims 8 to 11, wherein the sleep state associated with the one or more components includes one or more of a power off state, a reset state, a low-power consumption state, a slowing clock-rates state, or a wake-on-arrival state.

13. The first network device of any of claims 8 to 12, wherein the one or more processors are further to:
transition the one or more components and the link from the sleep state to an active state based on a traffic demand.

14. The first network device of any of claims 8 to 13, wherein the one or more processors are further to:
perform a health check of the link to ensure that the link maintains the sleep state.

15. A computer-readable medium comprising instructions which, when executed by a computer, cause the computer to carry out the method of any of claims 1 to 7.
